# EUROPÄISCHE PATENTSCHRIFT

(11) **EP 0 988 120 B1**
(45) Veröffentlichungstag und Bekanntmachung des Hinweises auf die Patenterteilung: **28.08.2002**
(21) Anmeldenummer: 98934866.9
(22) Anmeldetag: 02.06.1998
(51) Int. Cl.: B21B 38/04, B21B 38/00, B21B 37/78, G01N 27/90

(54) **VERFAHREN UND EINRICHTUNG ZUR ERFASSUNG DES IST-ZUSTANDES EINES HEISSEN ROHRES**
METHOD AND DEVICE FOR DETECTING THE ACTUAL STATE OF A HOT TUBE
PROCEDE ET DISPOSITIF POUR DETECTER L'ETAT REEL D'UN TUBE CHAUD

(30) Priorität: 05.06.1997 DE 19724755; 28.05.1998 DE 19825388
(43) Veröffentlichungstag der Anmeldung: 29.03.2000
(73) Patentinhaber: V & M Deutschland GmbH, 40472 Düsseldorf (DE)
(72) Erfinder: KÜMMERLING, Rolf, D-47249 Duisburg (DE); DEPPE, Gerd-Joachim, D-47809 Krefeld (DE); PEHLE, Hans, Joachim, D-41363 Jüchen (DE)
(74) Vertreter: Meissner, Peter E., Dipl.-Ing.
(86) Internationale Anmeldenummer: DE9801543
(87) Internationale Veröffentlichungsnummer: WO98055243

(56) Entgegenhaltungen:
- EP-A- 0 468 905
- WO-A-91/19164
- US-A- 3 753 085
- US-A- 4 641 092
- PATENT ABSTRACTS OF JAPAN vol. 010, no. 153 (M-484), 3. Juni 1986 -& JP 61 007010 A (SUMITOMO KINZOKU KOGYO KK), 13. Januar 1986
- PATENT ABSTRACTS OF JAPAN vol. 005, no. 018 (M-053), 3. Februar 1981 -& JP 55 147408 A (TOSHIBA CORP), 17. November 1980
- PATENT ABSTRACTS OF JAPAN vol. 010, no. 271 (P-497), 16. September 1986 -& JP 61 093904 A (SUMITOMO METAL IND LTD), 12. Mai 1986
- KECK E ET AL: "Wanddickenmessung an 1230°C heissen Rohrluppen mit einem neuartigen Laser-Ultraschall-System" STAHL UND EISEN., Bd. 107, Nr. 22, 2. November 1987, Seiten 63-66,103, XP002081910 DÜSSELDORF DE

## Beschreibung

Die Erfindung betrifft ein Verfahren zur Erfassung des IST-Zustandes eines heißen Rohres gemäß dem Oberbegriff des Patentanspruches 1.

In den letzten Jahren ist im Zuge der Einführung von Qualitätssicherungssystemen in den Rohrwerken versucht worden, die Meß- und Prüftechnik dorthin zu verlagern, wo die eventuellen Mängel ihre Ursache haben und nicht im nachhinein das Fertigrohr auf Mängel zu prüfen. Das Messen und Prüfen im Warmbereich, d. h. am heißen Rohr, wirft eine Vielzahl von technischen Problemen auf, da bedingt durch die hohe Temperatur einige Meßverfahren versagen bzw. bewährte Meßverfahren aus dem Kaltbereich modifiziert werden müssen. Ein anderes Problem betrifft bei der angestrebten Online-Prüfung die hohe Transportgeschwindigkeit des zu prüfenden Rohres im Auslaufbereich von Walzaggregaten im Unterschied zu moderaten Prüfgeschwindigkeiten auf separaten Prüfanlagen.

Zur Lösung einiger der genannten Probleme sind Verfahren und Systeme verfügbar, die beispielsweise im Auslaufbereich von Maß- oder Streckreduzierwalzwerken Kenngrößen wie Temperatur durch Infrarotmeßgeräte, Durchmesser mittels Diodenzeilenkamera, Länge mittels Laser und Wanddicke mittels Gamma-Durchstrahlanlage ermitteln. Die Messungen erfolgen kontinuierlich und berührungsfrei, wobei letzteres eine unabdingbare Forderung für eine Heißrohrmessung ist.

Nachteilig hierbei ist, daß der Oberflächenzustand z. B. bezüglich Risse oder Schalen am Heißrohr nicht miterfaßt wird. Deshalb ist zur Zeit noch ein erheblicher Prüfaufwand im Adjustagebereich erforderlich. Ebenso liegen bei den bekannten Verfahren keine ortsgetreu zusammengefaßten Daten über Geometrie und Oberflächenzustand vor, so daß die Information im Hinblick auf eine eindeutige Zuordnung bestimmter Fertigungsfehler unzureichend ist, was die Einflußnahme zur Qualitätsverbesserung des Erzeugnisses erschwert bzw. sogar unmöglich macht.

Aus der DE 691 12 773 T2 ist ein automatisches System für die Qualitätskontrolle geometrisch regelmäßig geformter Produkte, insbesondere Stahlrohre, während ihrer Erzeugung bekannt. Eine Röntgenstrahleinrichtung ist auf einem quer zur Transportrichtung des Rohres verschiebbaren Wagen angeordnet. Auf dem Schienenwagen ist ein Modul angeordnet, das die Signale für die Röntgenstrahleinrichtung aufbereitet. Die vom Modul erzeugten elektronischen Signale werden durch ein Datenerfassungs- und Kontrollsystem gesammelt. Dies verarbeitet die Signale und liefert sie an ein geeignetes Computersystem. Vorzugsweise ist das Computersystem mit zwei Schnittstellen für eine automatische Prozeßregelung verbunden. Die Schnittstellen für die automatische Prozeßregelung bereiten die Steuerinformation auf und liefern Rückkopplungs- und Vorwärtskopplungssignale an die Einstellmotoren, die Markiersysteme und die Schneideinrichtungen. Darüber hinaus wird im Sinne einer Korrektur bei dem bekannten Verfahren die Temperatur des zu prüfenden Gegenstandes in der abgerasterten Ebene gemessen. Aus dem Temperatursignal und den bei der vorliegenden Temperatur des abgerasterten Querschnittes erhaltenen Dimensionsergebnissen wird unter Verwendung von Dilatometriedaten, wie sie für die gemessene Dimension spezifisch sind, eine Voraussage der Dimensionsergebnisse für den abgerasterten Querschnitt bei einer gewünschten Temperatur gemacht. Zur Erfassung der Temperatur ist auf dem quer zur Transportrichtung des Rohres verschiebbaren Wagen mindestens ein Pyrometer angeordnet. Mittels des einen oder mehrerer Pyrometer wird die Temperatur des Rohres gemessen.

Vorzugsweise ist die Meßvorrichtung A in einer Rohrherstellinie zwischen den letzten Walzen eines Maßwalzwerkes und dem Farbmarkierer angeordnet. Mit Lichtschranken wird die Fortbewegung des Rohres überwacht und die Geschwindigkeit und Position des Rohres an verschiedenen Stationen im Herstellungsprozeß ermittelt. Nachteilig bei diesem bekannten Verfahren ist, daß die die Qualität des Fertigrohres beeinflussenden Warmverarbeitungs- bzw. Stranggießfehler nicht erfaßt werden, da die Röntgenstrahleinrichtung nur die Masse verändernde Form- und Maßabweichungen erfassen kann. Schalen und Risse verändern die Masse gar nicht oder nur in einem so geringen Maße, daß sie unterhalb der Ansprechgrenze bzw. Auflösungsgrenze für die Röntgenstrahleinrichtung liegt. Zudem wird bei jeder Durchstrahlungsmessung die Wanddicke örtlich nicht singulär sondern immer mit der in demselben Strahlengang liegenden Rückwand gemessen. Damit sind für Rückrechnungen auf Innengeometrie und Wanddickenverteilungen usw. grundsätzlich Annahmen zum Verlauf erforderlich, die jedoch insbesondere bei irregulären Walzungen nicht zutreffen müssen. Gerade dies soll aber durch ein solches Verfahren erkannt werden. Diese sogenannte Zweiwand-Messung hat auch den Nachteil, daß Taumelbewegungen des Rohres zu Meßfehlern führen. Unter Taumelbewegung wird dabei der in einer Ebene nach allen Richtungen mögliche radiale Versatz von der idealen Walzlinie verstanden. Die verschiedenen Meß- und Prüfeinrichtungen sind nicht zu einem Multi-Prüfblock zusammengefaßt und weisen auch keine spezielle Führung auf.

Aufgabe der Erfindung ist es, ein Verfahren zur Erfassung des IST-Zustandes eines heißen Rohres anzugeben, mit dem Daten über Geometrie und Oberflächenzustand, insbesondere die die Qualität der Rohre entscheidend beeinträchtigenden Fehler wie z. B. Risse und Schalen ortsgetreu erfaßbar sind bei kompakter Zusammenfassung aller einzelnen Meß- und Prüfvorrichtungen und das auch für empfindlich auf Taumelbewegungen des Rohres reagierende Meßverfahren geeignet ist.

Diese Aufgabe wird ausgehend vom Oberbegriff mit den im kennzeichnenden Teil des Patentanspruches 1 angegebenen Merkmalen gelöst. Vorteilhafte Weiterbildungen sowie eine Einrichtung zur Durchführung des Verfahrens sind Bestandteil von Unteransprüchen.

Kern der Erfindung ist die Kombination einer zusätzlichen zerstörungsfreien Prüfung der Außen- und Innenoberfläche des heißen Rohres auf Fehler, insbesondere Risse und Schalen mittels Wirbelstrom mit schon bekannten Messungen von Temperatur, Durchmesser, Länge und Wanddicke zu einem Meß- und Prüfsystem. Dabei wind ein gemeinsames System der Führung des Rohres genutzt, und die Meß- und Prüfsysteme werden mit den für die Messung und Prüfung notwendigen Daten bzw. Parametern versorgt.

Um die anfallenden Meß- und Prüfergebnisse allseitig nutzen zu können, sind die Ergebnisse ortsgetreu dem Rohr zugeordnet. Im Sinne eines Regelkreises werden die Meß- und Prüfergebnisse zurückgeführt, um so steuernd in den laufenden Fertigungsprozeß eingreifen zu können. Das kann unmittelbar das Maß- oder Streckreduzierwalzwerk betreffen, als auch die für die Rohrherstellung notwendigen Walzaggregate, die dem Maß- oder Streckreduzierwalzwerk vorgeschaltet sind. Die Meß- und Prüfergebnisse können auch dazu genutzt werden, um bei unzulässigen Abweichungen eine ortsgetreue Rohrmarkierung durchzuführen. Dies kann datentechnisch und/oder als Farbkennzeichnung erfolgen, wobei in bekannter Weise die einzelnen Fehlertypen farblich unterschieden werden können.

Die Wanddickenmessung erfolgt vorzugsweise mittels einer mehrkanaligen Einzelwandmessung durch eine Ultraschall-Laufzeitmessung. Im Unterschied zur bekannten Durchstrahlungsmethode, die aufwendige Strahlenschutzmaßnahmen erfordert, wird vorgeschlagen, den Ultraschall durch die Wechselwirkung zwischen einem Laserstrahl hoher Pulsenergie und der Rohroberfläche anzuregen. Die zurücklaufenden Ultraschallimpulse werden über die resultierende Rohroberflächenauslenkung ebenfalls optisch detektiert. Alternativ ist es auch möglich, dafür die bekannte EMUS-Technik einzusetzen. Die Schwierigkeit dabei ist aber, bei dem notwendigen geringen Abstand der Sonden zur heißen Rohroberfläche diese Sonden unter den betrieblichen Bedingungen gegen die Temperatureinflüsse zu schützen.

Zur Durchführung des Verfahrens wird erfindungsgemäß mit einem bestimmten Mindestabstand zum letzten Walzgerüst ein Führungsgerüst angeordnet. Unmittelbar davor befindet sich ein modifiziertes Gerüst, das mit einer Heiß-Wirbelstromprüfvorrichtung versehen ist. Unmittelbar nach dem Führungsgerüst sind die übrigen Komponenten der Meßvorrichtung angeordnet, die mindestens eine Heiß-Wanddickenmeßeinrichtung beinhaltet.

Der Abstand zwischen dem letzten Walzgerüst und dem modifizierten Gerüst mit der Heiß-Wirbelstromprüfvorrichtung wird so gewähit, daß die Zeitspanne zum Durchlaufen dieser Strecke für das auslaufende heiße Rohr mindestens 0,5 Sekunden beträgt. Diese Zeit ist erforderlich, damit nach der Abkühlung der Rohroberfläche durch die Walzen des letzten Walzgerüstes eine Wiederaufheizung der Oberfläche von innen heraus auf eine Temperatur oberhalb der Curie-Temperatur erfolgen kann. Andererseits sollen eventuell vorhandene Oberflächenungänzen wie Schalen möglichst Temperaturen unterhalb der Curie-Temperatur aufweisen.

Das Führungsgerüst ist vorzugsweise als Wechselgerüst ausgebildet. Es kann einstellbare Walzen aufweisen, die auch angetrieben sein können. Um eine hohe Führungsgenauigkeit insbesondere für die Wanddickenmessung sicherzustellen, soll das Spiel im Führungsgerüst ≤ 1 mm sein. Es ist günstig, für das Führungsgerüst ein zum letzten Gerüst maßgleiches Gerüst zu verwenden. Da die Walzen in aufeinanderfolgenden Walzgerüsten um jeweils 180°/Anzahl der Walzen versetzt sind, kann je nach gerader oder ungerader Anzahl der Walzgerüste ein "Sprung-in-Sprung-Walzen" zwischen letztem Walzgerüst und Führungsgerüst auftreten. Um dies zu verhindern, ist es deshalb besonders günstig, wenn der Winkelversatz zwischen Walzgerüst und Führungsgerüst 180°/(2 x Anzahl der Walzen) beträgt.

Das erfindungsgemäß vorgeschlagene Verfahren hat den Vorteil, daß über die Erfassung von Temperatur, Wanddicke, Durchmesser und Länge eines heißen Rohres hinausgehend auch die auf der Außen- und Innenoberfläche auftretenden Fehler, insbesondere Risse und Schalen, erfaßt werden, um so rechtzeitig auf Schäden an Walzen, Innenwerkzeugen, Ofenführung usw. aufmerksam gemacht zu werden.

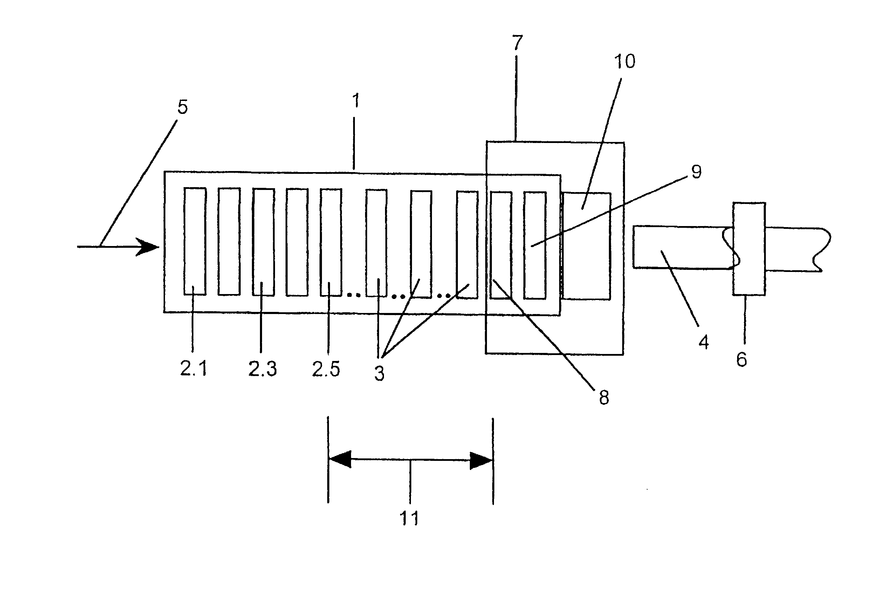

In der einzigen Figur wird anhand einer Prinzipdarstellung das erfindungsgemäße Verfahren näher erläutert.
Auf einem Wechselrahmen 1 eines Maß- oder Streckreduzierwalzwerkes sind mehrere Walzgerüste 2.1 - 2.5 angeordnet, wobei die Anzahl im Falle eines Streckreduzierwalzwerkes je nach angestrebter Heißrohrabmessung beispielsweise 21 betragen kann. Üblicherweise wird bei nicht vollbesetztem Wechselrahmen 1 der Abstand zwischen dem letzten Walzgerüst 2.5 und dem Auslaufbereich 4 mit Auslaufgerüsten 3 belegt. Diese führen das hier nicht dargestellte Heißrohr ohne Andruck und großem Spiel bis in den Auslaufbereich 4, der beispielsweise als Rinne ausgebildet ist. Danach kann beispielsweise eine Vorrichtung 6 für eine Farbkennzeichnung angeordnet sein. Der Einlauf der Luppe erfolgt in diesem Ausführungsbeispiel auf der linken Seite, hier gekennzeichnet durch einen Pfeil 5, wobei die Richtung des Pfeiles 5 auch die Walzrichtung ist.

Erfindungsgemäß ist vor dem Auslaufbereich 4 ein Heiß-Multiprüfblock 7 angeordnet. Dieser weist ein modifiziertes Gerüst 8 auf, in dem zur Erfassung des Oberflächenzustandes des Heißrohres eine Heiß-Wirbelstromprüfvorrichtung angeordnet ist. Vorzugsweise ist dieses Gerüst 8 als Wechselgerüst ausgebildet, um kurzfristig die Meßvorrichtung an die zu walzende Abmessung anzupassen. In Walzrichtung 5 gesehen ist nach diesem Gerüst 8 ein Führungsgerüst 9 mit geringem Spiel ≤ 1 mm angeordnet. Vorzugsweise ist es maßgleich wie das letzte Walzgerüst 2.5 ausgebildet, wobei der Walzspalt aber um 180° /(2 x Anzahl der im letzten Walzgerüst 2.5 angeordneten Walzen) versetzt ist. Als besonders zweckmäßig hat sich herausgestellt, wenn das modifizierte Gerüst 8 für die Heiß-Wirbelstromprüfung und das Führungsgerüst 9 auf den letzten Gerüstplätzen des Wechselrahmens 1 angeordnet sind. Das Führungsgerüst 9 hat die Funktion, die Führung des Heißrohres für die Heiß-Wirbelstromprüfung und die nachgeschalteten Komponenten der Meßvorrichtung 10, d. h. für Wanddicke, Geschwindigkeit und Durchmesser, zu übernehmen. Für eine einwandfreie Funktion der Heiß-Wirbelstromprüfvorrichtung ist von Bedeutung, daß der Abstand 11 zwischen dem letzten Walzgerüst 2.5 und dem modifizierten Gerüst 8 so gewählt ist, daß die Zeitspanne zum Durchlauf dieser Strecke für das auslaufende heiße Rohr mindestens 0,5 Sekunden beträgt. Dies ist von Wichtigkeit, wenn statt der Auslaufgerüste 3 weitere Gerüstplätze mit Walzgerüsten belegt sind.

## Patentansprüche

1. Verfahren zur Erfassung des aktuellen IST-Zustandes eines heißen Rohres, bei dem die Wanddicke, der Durchmesser, die Temperatur und die Geschwindigkeit beim Auslaufen aus einem Maß- oder Streckreduzierwalzwerk einer Rohrwalzanlage kontinuierlich und berührungsfrei gemessen werden,
**dadurch gekennzeichnet, dass** zusätzlich die Außen- und Innenoberfläche auf Fehler, insbesondere Risse und Schalen zerstörungsfrei geprüft und die Messungen und Prüfungen für Wanddicke, Durchmesser, Temperatur und Geschwindigkeit zu einem Meß- und Prüfsystem zusammengefaßt werden, wobei ein gemeinsames System der Führung des Rohres genutzt wird und die Meß- und Prüfsysteme gemeinsam mit für die Messung und Prüfung notwendigen Daten bzw. Parametern versorgt werden.

2. Verfahren nach Anspruch 1,
**dadurch gekennzeichnet,**
**dass** die Fehlerprüfung mittels Wirbelstrom erfolgt.

3. Verfahren nach den Ansprüchen 1 und 2,
**dadurch gekennzeichnet,**
**dass** die Meß- und Prüfergebnisse gemeinsam ortsbezogen dem Rohr zugeordnet und diese ortsbezogen zur Steuerung und Regelung des Maß- oder Streckreduzierwalzwerkes verwendet werden.

4. Verfahren nach den Ansprüchen 1 - 3,
**dadurch gekennzeichnet,**
**dass** die Meß- und Prüfergebnisse ortsbezogen zur Steuerung der dem Maßoder Streckreduzierwalzwerk vorgeschalteten, zur Rohrherstellung notwendigen Walzaggregate verwendet werden.

5. Verfahren nach Anspruch 1,
**dadurch gekennzeichnet,**
**dass** die Wanddickenmessung in Form einer mehrkanaligen Einzelmessung mittels einer Ultraschall-Laufzeitmessung erfolgt, wobei der Ultraschall durch die Wechselwirkung zwischen einem Laserstrahl hoher Pulsenergie und der Rohroberfläche angeregt wird und die zurücklaufenden Ultraschallwellen optisch detektiert werden.

6. Einrichtung zur Durchführung des Verfahrens nach Anspruch 1 mit einer im Auslaufbereich eines Maß- oder Streckreduzierwalzwerkes (2.1-2.5) angeordneten Meßvorrichtung (10),
**dadurch gekennzeichnet,**
**dass** im Abstand zum letzten Walzgerüst (2.5) ein Führungsgerüst (9) angeordnet ist und unmittelbar davor sich ein modifiziertes Gerüst (8) befindet, das mit einer Heiß-Wirbelstrom-Prüfvorrichtung versehen ist, und unmittelbar nach dem Führungsgerüst (9) die Meßvorrichtung (10) sich befindet, die mindestens eine Heiß-Wanddickenmeßvorrichtung aufweist.

7. Einrichtung nach Anspruch 6,
**dadurch gekennzeichnet,**
**dass** der Abstand (11) zwischen dem letzten Walzgerüst (2.5) und der Wirbelstromprüfvorrichtung (8) einer Zeitspanne von mindestens 0,5 Sekunden zum Durchlaufen der Strecke für das auslaufende Rohr entspricht.

8. Einrichtung nach Anspruch 6,
**dadurch gekennzeichnet,**
**dass** das Führungsgerüst (9) und das modifizierte Gerüst (8) als Wechselgerüst ausgebildet sind und das Führungsgerüst (9) angetrieben und maßgleich zum letzten Walzgerüst (2.5) ausgebildet ist.

9. Einrichtung nach den Ansprüchen 6-8,
**dadurch gekennzeichnet,**
**dass** das Führungsgerüst (9) als Gerüst mit einstellbaren Walzen ausgebildet ist.

10. Einrichtung nach Anspruch 9,
**dadurch gekennzeichnet,**
**dass** die Walzen innen gekühlt sind.

11. Einrichtung nach den Ansprüchen 9 und 10,
**dadurch gekennzeichnet,**
**dass** das Führungsgerüst (9) mindestens zwei Walzen aufweist.

12. Einrichtung nach den Ansprüchen 9 - 11,
**dadurch gekennzeichnet,**
**dass** der Walzenspalt um einen von Null verschiedenen Winkel gegenüber dem entsprechenden Walzenspalt des letzten Walzgerüstes (2.5) versetzt ist.

13. Einrichtung nach Anspruch 12,
**dadurch gekennzeichnet,**
**dass** der Winkelversatz 180°/(2 x Anzahl der Walzen des Walzgerüstes (2.5)) beträgt.

14. Einrichtung nach einem der Ansprüche 6-13,
**dadurch gekennzeichnet,**
**dass** das Spiel im Führungsgerüst ≤ 1 mm ist.

## Claims

1. A method for detecting the current actual state of a hot tube, in which the wall thickness, diameter, temperature and speed are measured continuously and without contact upon emerging from a sizing or stretch-reduction mill of a tube rolling plant, **characterised in that** in addition the outer and inner surface are tested non-destructively for faults, in particular cracks and peeling, and the measurements and tests for wall thickness, diameter, temperature and speed are combined into a measurement and test system, wherein a common system of guiding the tube is utilised and the measurement and test systems are jointly supplied with data or parameters necessary for the measurement and testing.

2. A method according to Claim 1, **characterised in that** the fault testing is effected by means of eddy currents.

3. A method according to Claims 1 and 2, **characterised in that** the measurement and test results are jointly allocated to the tube in location-specific manner and these are used in location-specific manner to control and adjust the sizing or stretch-reduction mill.

4. A method according to Claims 1 to 3, **characterised in that** the measurement and test results are used in location-specific manner to control the rolling units necessary for producing the tube which precede the sizing or stretch-reduction mill.

5. A method according to Claim 1, **characterised in that** the wall thickness is measured in the form of a multi-channel individual measurement by means of an ultrasound transit-time measurement, the ultrasound being induced by the interaction between a laser beam of high pulse energy and the tube surface and the returning ultrasonic waves being detected optically.

6. An apparatus for performing the method according to Claim 1, comprising a measuring device (10) located in the exit region of a sizing or stretch-reduction mill (2.1-2.5), **characterised in that** a guide stand (9) is located at a distance from the final roll stand (2.5) and a modified stand (8) is located immediately before it, which modified stand is provided with a hot eddy-current testing device, and the measuring device (10), which has at least one hot wall thickness measuring device, is located immediately after the guide stand (9).

7. An apparatus according to Claim 6, **characterised in that** the distance (11) between the final roll stand (2.5) and the eddy-current testing device (8) corresponds to a time of at least 0.5 seconds for passing through the section for the emerging tube.

8. An apparatus according to Claim 6, **characterised in that** the guide stand (9) and the modified stand (8) are designed as an interchangeable stand and the guide stand (9) is driven and is of identical dimensions to the final roll stand (2.5).

9. An apparatus according to Claims 6 to 8, **characterised in that** the guide stand (9) is in the form of a stand with adjustable rolls.

10. An apparatus according to Claim 9, **characterised in that** the rolls are internally cooled.

11. An apparatus according to Claims 9 and 10, **characterised in that** the guide stand (9) has at least two rolls.

12. An apparatus according to Claims 9 to 11, **characterised in that** the roll nip is offset by an angle other than zero relative to the corresponding roll nip of the final roll stand (2.5).

13. An apparatus according to Claim 12, **characterised in that** the angular offset is 180°/(2 x number of rolls of the roll stand (2.5)).

14. An apparatus according to one of Claims 6 to 13, **characterised in that** the play in the guide stand is ≤ 1 mm.

## Revendications

1. Procédé pour la détection de l'état réel actuel d'un tube chaud, dans lequel l'épaisseur de paroi, le diamètre, la température et la vitesse à la sortie d'un laminoir étireur-réducteur ou d'un laminoir calibreur d'une installation de laminage de tubes sont mesurés en continu et sans contact,
**caractérisé en ce qu'**il est vérifié en plus, par contrôle non destructif, si la surface intérieure et extérieure présente des défauts, en particulier des fissures et des écailles, et **en ce que** les mesures et contrôles concernant l'épaisseur de paroi, le diamètre, la température et la vitesse sont réunis pour former un système de mesure et de contrôle, un système commun de commande du tube étant utilisé et les systèmes de mesure et de contrôle étant alimentés en commun avec des données et paramètres nécessaires à la mesure et au contrôle.

2. Procédé selon la revendication 1,
**caractérisé en ce que** le contrôle de défauts s'effectue par courants de Foucault.

3. Procédé selon les revendications 1 et 2,
**caractérisé en ce que** les résultats de mesure et de contrôle sont affectés au tube, ensemble et localement, et ceux-ci sont utilisés localement pour la commande et la régulation du laminoir étireur-réducteur ou du laminoir calibreur.

4. Procédé selon les revendications 1 à 3,
**caractérisé en ce que** les résultats de mesure et de contrôle sont utilisés localement pour la commande des groupes de laminage nécessaires à la fabrication des tubes et installés en amont du laminoir étireur-réducteur ou du laminoir calibreur.

5. Procédé selon la revendication 1,
**caractérisé en ce que** la mesure d'épaisseur de paroi s'effectue sous la forme d'une mesure individuelle à voies multiples au moyen d'une mesure de temps de transit d'ultrasons, l'ultrason étant activé par l'interaction entre un rayon laser de haute énergie d'impulsion et la surface du tube et les ondes ultrasonores renvoyées étant détectées de manière optique.

6. Dispositif pour la mise en oeuvre du procédé selon la revendication 1 comportant un dispositif de mesure (10) installé dans la zone de sortie d'un laminoir étireur-réducteur ou d'un laminoir calibreur (2.1-2.5),
**caractérisé en ce que**, à distance de la dernière cage de laminoir (2.5), il est monté une cage de guidage (9) et que, juste avant cette dernière, il se trouve une cage modifiée (8), laquelle est pourvue d'un dispositif de contrôle par courants de Foucault à chaud, et que le dispositif de mesure (10) se trouve juste après la cage de guidage (9), lequel présente au moins un dispositif de mesure d'épaisseur de paroi à chaud.

7. Dispositif selon la revendication 6,
**caractérisé en ce que** la distance (11) entre la dernière cage de laminoir (2.5) et le dispositif de contrôle par courants de Foucault (8) correspond à un laps de temps d'au moins 0,5 seconde, temps que le tube sortant met pour parcourir la distance.

8. Dispositif selon la revendication 6,
**caractérisé en ce que** la cage de guidage (9) et la cage modifiée (8) sont réalisées en tant que cages interchangeables, et la cage de guidage (9) est entraînée et est réalisée aux mêmes dimensions que la dernière cage de laminoir (2.5).

9. Dispositif selon les revendications 6 à 8,
**caractérisé en ce que** la cage de guidage (9) est réalisée sous la forme d'une cage ayant des cylindres réglables.

10. Dispositif selon la revendication 9,
**caractérisé en ce que** les cylindres sont refroidis intérieurement.

11. Dispositif selon les revendications 9 et 10,
**caractérisé en ce que** la cage de guidage (9) présente au moins deux cylindres.

12. Dispositif selon les revendications 9 à 11,
**caractérisé en ce que** la fente des cylindres est décalée d'un angle différent de zéro par rapport à la fente correspondante des cylindres de la dernière cage de laminoir (2.5).

13. Dispositif selon la revendication 12,
**caractérisé en ce que** le décalage angulaire est égal à 180°/(2 x nombre des cylindres de la cage de laminoir (2.5)).

14. Dispositif selon l'une des revendications 6 à 13,
**caractérisé en ce que** le jeu dans la cage de guidage est inférieur ou égal à 1 mm.
